# NEW EUROPEAN PATENT SPECIFICATION

(11) **EP 2 222 762 B2**
(45) Date of publication and mention of the opposition decision: **23.08.2023**
(45) Mention of the grant of the patent: 27.03.2019
(21) Application number: 08865998.2
(22) Date of filing: 19.12.2008
(51) Int. Cl.: C08J 7/04, B05D 7/00, C08L 67/00, C08L 33/06, C08G 18/79, C08G 18/00, C08G 18/42, C08G 18/62, C08G 18/40, C09D 133/06, C09D 167/00, C09D 175/04

(54) **PROCESS FOR PRODUCING A MULTILAYER COATING**
VERFAHREN ZUR HERSTELLUNG MEHRLAGIGEN BESCHICHTUNG
PROCÉDÉ DE FABRICATION D'UN REVÊTEMENT MULTICOUCHE

(30) Priority: 20.12.2007 US 8520
(43) Date of publication of application: 01.09.2010
(73) Proprietor: Coatings Foreign IP Co. LLC, Wilmington, DE 19801 (US)
(72) Inventor: VAES, Ann, 2500 Koningshooikt (BE); FEY, Thomas, 55128 Mainz (DE)
(74) Representative: LKGlobal UK Ltd.
(86) International application number: PCT/US2008/087565
(87) International publication number: WO 2009/086034

(56) References cited:
- WO-A1-00/35598
- US-A- 5 612 095
- US-A1- 2002 119 329
- US-A1- 2004 241 450
- US-A1- 2005 137 298
- US-A1- 2005 271 882
- US-A1- 2006 014 024
- US-B1- 6 291 024
- DATABASE WPI Week 200250 Thomson Scientific, London, GB; AN 2002-465545 XP002518926 & JP 2002 012984 A (KANSAI PAINT CO LTD) 15 January 2002 (2002-01-15)
- ANONYMOUS: "Dynasylan GLYMO", INTERNET CITATION, May 2006 (2006-05), XP002431740, Retrieved from the Internet: URL:https://www.dynasylan.com/www2/uploads _all/productfinder/silanes_15_1 71005155050.pdf [retrieved on 2007-04-26]

## Description

### Field of the Invention

### CROSS-REFERENCE TO RELATED APPLICATION

This application claims priority from U.S. Provisional Application Serial No. 61/008520 (filed December 20, 2007), the disclosure of which is incorporated by reference herein for all purposes as if fully set forth.

The invention relates to a process for producing a multilayer coating from a filler layer and a topcoat layer, which process may in particular be used for coating vehicle bodies and vehicle body parts.

### Description of Prior Art

Multilayer coatings made up, for example, of a filler, a base coat and a clear coat layer are typical coating structures in vehicle coating. Similar coating structures, for example based on a primer and a transparent or pigmented top coat layer are also known from other fields of industrial coating.

EP 1050551, for example, accordingly describes aqueous two-component polyurethane systems with improved adhesion and corrosion resistance, which are very suitable for direct coating of metallic substrates, for example vehicle bodies. The aqueous two-component PU system contains an aqueous OH-functional resin dispersion, a polyisocyanate with free isocyanate groups and an epoxy-functional silane component.

EP 1484349 furthermore describes coating compositions for coating plastics, in particular plastics interior parts or plastics exterior attachments for vehicles, the plastics parts comprising a silver plating layer. A base coat coating composition is disclosed which contains an OH-functional acrylate resin, an organically modified polydimethylsiloxane, an epoxy-functional silane and a polyisocyanate curing agent. A clear coat coating composition is furthermore disclosed which contains an OH-functional acrylate resin, an acrylate resin with tertiary amino groups, a polyisocyanate cross-linking agent and a compound with epoxy groups and with hydrolyzable silane groups. The coating materials are applied onto the plastics substrate in the sequence: base coat, silver plating layer and clear coat. A primer is preferably applied directly onto the plastics substrate before application of the base coat layer.

It is likewise known from WO 02/051899 to use a two-component coating composition containing a polyisocyanate component, an isocyanate-reactive component and a compound with an epoxy group and an alkoxysilane group for pipe coating.

US 2006/014024 A1 discloses a multilayer coating film comprising a base coating film containing an epoxy silane, a silver-plating layer and a clear coating layer. The silver-plating layer is formed by applying ammonium silver nitrate and a reductant solution.

US 2005/271882 A1 discloses a multilayer coating comprising a plastic primer containing an adhesion promoter additive of a chlorinated polyolefine and (3-glycidoxypropyl)trimethoxysilane, a solvent-based base coat composition and a clear coat.

JP 20000195740 A discloses a primer for titanium alloys containing an acrylic resin, polyisocyanate, an alicyclic epoxy compound and gamma-glycidoxy propyl trimethoxysilane.

US 2004/0241450 A1 discloses a multilayer coating comprising a solvent-based base coat paint, a shining-material-containing aqueous base coat paint and a clear coat.

US 2005/137298 A1 discloses a multilayer coating comprising a primer containing an epoxy silane, a non-sanding epoxy primer and a topcoat.

US 6,291,024 B1 discloses a coating on a metal surface, which coating comprises a polyurethane and an epoxy silane adhesion promoter.

US 5,612,095 A relates to the production of a multicoat lacquer finish by application of a base coat layer of an aqueous coating agent to a substrate and subsequent application of a layer of a clear coat containing an organic solvent.

Environmentally friendly water-based coating materials are increasingly being used in vehicle coating. In particular, water-based products are increasingly being used for the color-imparting and/or special effect-imparting base coat and single-stage top coat materials, which have a relatively high solvent content. When water-borne base coat and single-stage top coat materials, for example, are used, it is of course essential to guarantee the necessary technological properties of the overall coating structure, such as for example good humidity resistance as well assatisfactory optical properties and drying characteristics. In particular, when water-borne base coat materials are used in the above-stated multilayer structure comprising base coat and clear coat, there is a lack of satisfactory initial wet adhesion between the individual layers after humidity strain, i.e. between base coat and clear coat layer and between a prior coating, for example a filler layer, and the base coat layer. Cohesion within the water-borne base coat layer itself is also unsatisfactory. Similar problems are observed when using water-borne single-stage top coats.

It has not hitherto been possible to provide a satisfactory solution to these adhesion problems which does not simultaneously substantially impair other important coating properties, such as the drying characteristics, stability and optical properties of the resultant coatings.

The object of the present invention was thus to provide a process for the multilayer coating of substrates using water-borne base coat materials or water-borne single-stage top coat materials, which yields a coating structure with very good humidity resistance and adhesion properties, e.g. satisfactory wet and dry interlayer adhesion, in particular with very good initial wet adhesion between a filler layer and the base coat layer and between the base coat and clear coat layer or between a filler layer and the single-stage top coat layer. Cohesive failure within the water-borne base coat layer or water-borne single-stage top coat layer itself should also not occur. Other important technical coating properties, such as for example the drying characteristics, the optical properties of the resultant coatings, the stability of the compositions and good application properties of the coating composition should not be impaired as a consequence.

### Summary of the Invention

The invention accordingly relates to a process for the multilayer coating of substrates, in particular vehicle bodies and vehicle body parts, comprising the following steps:
1. 1. Applying a filler layer of a filler coating composition onto an optionally precoated substrate,
2. 2. Applying a base coat layer of a water-based base coat coating composition containing color-imparting and/or special effect-imparting pigments, one or more binders, water and optionally at least one of the following constituents: crosslinking agents, fillers, conventional coating additives and organic solvents onto the filler layer
3. 3. Applying a clear coat layer of a transparent clear coat coating composition onto the base coat layer and
4. 4. Curing the clear coat layer, optionally together with the filler layer and/or the base coat layer,
   wherein the filler coating composition being an organic solvent-based coating composition comprising:
   1. A) at least one binder with functional groups containing active hydrogen,
   2. B) at least one polyisocyanate cross-linking agent with free isocyanate groups and
   3. C) at least one epoxy-functional silane of the general Formula (I): 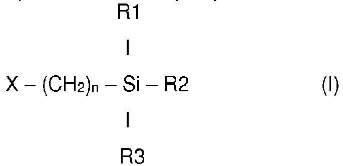 X denoting the residues 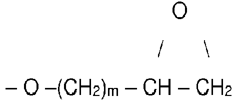
      with m being 1-4 or 3,4 - epoxycyclohexyl,
      R1, R2, R3 mutually independently meaning identical or different organic residues with 1 to 30 carbon atoms per molecule, providing that at least one of the residues is an alkoxy group with 1 to 4 carbon atoms and
      n is 2, 3 or 4, preferably 2 or 3
      wherein the filler coating composition comprises 0.5 to 7.0% by weight solids of the epoxy-functional silane component C), relative to the sum of the solids content of component A) and component B).

Alternatively the invention relates to a process for the multilayer coating of substrates, in particular vehicle bodies and vehicle body parts, comprising the following steps:
1. 1. Applying a filler layer of a filler coating composition onto an optionally pre-coated substrate,
2. 2. Applying a single-stage top coat layer of a water-based single-stage top coat coating composition containing color-imparting and/or special effect-imparting pigments onto the filler layer, wherein the top coat coating compositions comprises a two-component coating composition comprising a binder component comprising active hydrogen and a polyisocyanate crosslinking agent and
3. 3. Curing the top coat layer, optionally together with the filler layer, wherein the filler coating composition being an organic solvent-based coating composition comprising:
   1. A) at least one binder with functional groups containing active hydrogen,
   2. B) at least one polyisocyanate cross-linking agent with free isocyanate groups and
   3. C) at least one epoxy-functional silane of the general Formula (I): 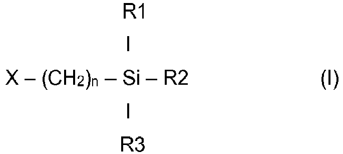 X denoting the residues 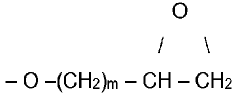
      with m being 1-4 or 3,4 - epoxycyclohexyl,
      R1, R2, R3 mutually independently meaning identical or different organic residues with 1 to 30 carbon atoms per molecule, providing that at least one of the residues is an alkoxy group with 1 to 4 carbon atoms and
      n is 2, 3 or 4, preferably 2 or 3
      wherein the filler coating composition comprises 0.5 to 7.0% by weight solids of the epoxy-functional silane component C), relative to the sum of the solids content of component A) and component B).

It has surprisingly been found that, by using the specific epoxy-functional silane compounds C) in the filler coating composition to be used in the process according to the invention, a multilayer structure of a filler, a water-borne base coat and a clear coat layer or alternatively of a filler and a water-borne single-stage topcoat layer is obtained, which exhibits excellent adhesion properties, i.e. excellent wet adhesion and excellent high pressure cleaning resistance as well. In particular the multilayer structure has excellent interlayer adhesion between the filler layer and the water-borne base coat layer or the single-stage top coat layer and between the water-borne base coat layer and the clear coat layer, without consequently impairing other important technical coating properties such as application properties, drying and optical properties. It has surprisingly also proved possible to improve cohesion within the water-borne base coat layer and within the water-borne single-stage top coat layer, in particular after exposure to severe conditions, for example in the moist heat test.

### Detailed Description of the Invention

The invention will be explained in greater detail below.

It will be appreciated that certain features of the invention which are, for clarity, described above and below in the context of separate embodiments may also be provided in combination in a single embodiment. Conversely, various features of the invention that are, for brevity, described in the context of a single embodiment may also be provided separately or in any sub-combination. In addition, references in the singular may also include the plural (for example, "a" and "an" may refer to one, or one or more) unless the context specifically states otherwise.

The term (meth)acrylic as used here and hereinafter should be taken to mean methacrylic and/or acrylic.

Unless stated otherwise, all molecular weights (both number and weight average molecular weight) referred to herein are determined by GPC (gel permeation chromatographie) using polystyrene as the standard and tetrahydrofurane as the liquid phase.

Water-based coating compositions are coating compositions, wherein water is used as solvent or thinner when preparing and/or applying the coating composition. Usually, water-based coating compositions contain for example 30 to 90% by weight of water, based on the total amount of the coating composition and optionally, up to 20% by weight, preferably, below 15% by weight of organic solvents, based on the total amount of the coating composition.

Accordingly organic solvent-based coating compositions are coating compositions, wherein organic solvents are used as solvents or thinner when preparing and/or applying the coating composition. Usually, solvent-based coating compositions contain for example 20 to 90% by weight of organic solvents, based on the total amount of the coating composition.

The filler coating composition used in the process according to the invention will first of all be explained in greater detail.

The filler coating composition comprise a "two-component" coating composition, i.e. the components which are reactive towards one another, namely the component comprising active hydrogen (A) and the polyisocyanate component (B), must be stored separately from one another prior to application in order to avoid a premature reaction. Generally binder component A) and polyisocyanate component B) may only be mixed together shortly before application. The term "shortly before application" is well-known to a person skilled in the art. The time period within which the ready-to-use coating composition may be prepared prior to the actual use/application depends, e.g., on the pot life of the coating composition.

In principle, the coating compositions can still be adjusted to spray viscosity with organic solvents prior to application. All the further components which are required for producing a usable coating composition, such as for example pigments, fillers, organic solvents and additives, may in each case be present in one of the two components or in both components of the two-component system.

Also, the epoxy-functional silane compounds C) may be present in one of the two components or in both components. Most preferred the epoxy-functional silane compounds C) are present in the polyisocyanate component B). The filler coating composition to be used in the process of the present invention preferably comprises 30 to 70 % by weight solids of the at least one binder with functional groups containing active hydrogen (component A) and 20 to 50 % by weight solids of the at least one curing agent with free isocyanate groups (component B), relative to the total amount of the filler coating composition.

The epoxy-functional silane compounds C) are used in the filler composition in concentrations of 0.5 to 7.0 % by weight solids, in particular of 1.0 to 6.0 % by weight solids and most preferred of 1.2 to 5.0 % by weight solids, relative to the sum of the solids content of component A) and component B). If component C) is used in quantities of greater than 7.0 % by weight solids this leads to inferior viscosity and increases the risk of blistering during humidity/temperature strain and of cracking. If component C) is used in quantities of less than 0.5 % by weight solids the described positive effects can not be achieved.

In addition to components A), B) and C) the filler coating composition may contain usual components to be used in filler coating compositions, such as pigments, fillers, additives and organic solvents. The pigments, fillers, additives and organic solvents are used in usual quantities known to a skilled person.

Component A) of the filler coating composition comprises binders with functional groups containing active hydrogen. The binders may be oligomeric and/or polymeric compounds with a number average molecular weight (Mn) of, e.g., 500 to 200,000 g/mole, preferably of 1100 to 100,000 g/mole. The functional groups with active hydrogen in particular comprise hydroxyl groups, primary and/or secondary amino groups. Binders with hydroxyl groups are preferably used.

The binders with hydroxyl groups are for example the polyurethanes, (meth)acrylic copolymers, polyesters and polyethers, known from polyurethane chemistry to the skilled person, which are used in the formulation of organic solvent based coating compositions. They may each be used individually or in combination with one another.

Preferably hydroxyl-functional (meth)acrylic copolymers are used as component A).

Examples of (meth)acrylic copolymers include all (meth)acrylic copolymers which are suited for solvent-based coating compositions and known to a skilled person. For example, they can be those with a number average molecular weight Mn of 1000-20000 g/mol, preferably, of 1100-15000, an acid value of 0 - 60 mg KOH/g, preferably, of 0 - 35 mg KOH/g and a hydroxyl value of 20-400 mg KOH/g, preferably, of 20-250 mg KOH/g and most preferred of 40-150 mg KOH/g. The (meth)acrylic copolymers can also have been prepared in the presence of different binders, e.g., in the presence of oligomeric or polymeric polyester and/or polyurethane resins.

The preparation of the (meth)acrylic copolymers takes place by usual preparation techniques, e.g., by radical polymerization in the organic phase, in which monomers, solvents and polymerization catalyst are charged into a conventional polymerization reactor.

The (meth)acrylic copolymers thus formed have, for example, a glass transition temperature (Tg) of at least 30 ° C and preferably of 40-80 ° C. All glass transition temperatures disclosed herein are determined by DSC (differential scanning calorimetry).
Typically useful polymerization catalysts are azo type catalysts such as azo-bisisobutyronitrile, 1,1'-azo-bis(cyanocylohexane), acetates such as t-butyl peracetate, peroxides such as di-t-butyl peroxide, benzoates such as t-butyl perbenzoate, octoates such as t-butyl peroctoate and the like.
Typical solvents that can be used are ketones such as methyl amyl ketone, methyl isobutyl ketone, methyl ethyl ketone, aromatic hydrocarbons such as toluene, xylene, alkylene carbonates such as propylene carbonate, n-methyl pyrrolidone, ethers, ester, such as butyl acetate, and mixtures of any of the above.

Free-radically polymerizable, olefinically unsaturated monomers, which may be used are monomers which, in addition to at least one olefinic double bond, also contain further functional groups and monomers which, apart from at least one olefinic double bond, contain no further functional groups. Further functional groups may be, for example, urea, hydroxyl, carboxyl, sulfonic acid, silane, amine, amide, acetoacetate or epoxy groups. It would be clear that only those functional groups can be combined in the poly(meth)acrylate copolymer which do not tend to self-crosslink.

Olefinically unsaturated monomers with hydroxyl groups can be used to introduce hydroxyl groups into the (meth)acrylic copolymers. Suitable hydroxy-functional unsaturated monomers are, for example, hydroxyalkyl esters of alpha, beta-olefinically unsaturated monocarboxylic acids with primary or secondary hydroxyl groups. These may, for example, comprise the hydroxyalkyl esters of acrylic acid, methacrylic acid, crotonic acid and/or isocrotonic acid. The hydroxyalkyl esters of (meth)acrylic acid are preferred. The hydroxyalkyl residues may contain, for example, 2-10 C atoms, preferably, 2-6 C atoms. Examples of suitable hydroxyalkyl esters of alpha, beta-olefinically unsaturated monocarboxylic acids with primary hydroxyl groups are hydroxyethyl (meth)acrylate, hydroxypropyl (meth)acrylate, hydroxybutyl (meth)acrylate, hydroxyamyl (meth)acrylate, hydroxyhexyl (meth)acrylate. Examples of suitable hydroxyalkyl esters with secondary hydroxyl groups are 2-hydroxypropyl (meth)acrylate, 2-hydroxybutyl (meth)acrylate and 3-hydroxybutyl (meth)acrylate. Further olefinically unsaturated monomers or adducts with hydroxyl groups may, of course, also be used.

Carboxyl functional olefinically unsaturated monomers are used to introduce carboxyl groups into the (meth)acrylic copolymers. Examples of suitable olefinically unsaturated carboxylic acids include acrylic acid, methacrylic acid, crotonic acid and isocrotonic acid, itaconic acid, maleic acid, fumaric acid and the halfesters of the difunctional acids. Acrylic and methacrylic acid are preferred.

Examples of other additional suitable unsaturated monomers, which contain apart from an olefinic double bond further functional groups are dimethylaminoethyl (meth)acrylate, acetoacetoxyethyl (meth)acrylate, (meth)acrylamide, alkoxy methyl (meth)acrylamides, vinyl silane, methacryloxyethyl trialkoxysilanes, acrylamido 2 - methyl propane, vinyl imidazole.

Unsaturated monomers which, apart from at least one olefinic double bond, contain no further functional groups are, for example, aliphatic esters of olefinically unsaturated carboxylic acids, vinyl ester and /or vinylaromatic hydrocarbons.

Examples of suitable aliphatic esters of olefinically unsaturated carboxylic acids include, in particular, esters of alpha, beta-olefinically unsaturated monocarboxylic acids with aliphatic alcohols. Examples of suitable olefinically unsaturated carboxylic acids are acrylic acid, methacrylic acid, crotonic acid and isocrotonic acid. The alcohols are, in particular, aliphatic monohydric branched or unbranched alcohols having 1-20 carbon atoms in the molecule. Examples of (meth)acrylates with aliphatic alcohols are methyl acrylate, ethyl acrylate, isopropyl acrylate, tert.-butyl acrylate, n-butyl acrylate, isobutyl acrylate, 2-ethylhexyl acrylate, lauryl acrylate, stearyl acrylate and the corresponding methacrylates.

Examples of suitable vinyl esters are vinyl acetate, vinyl propionate and vinyl esters of saturated monocarboxylic acids branched in the alpha position, e.g., vinyl esters of saturated alpha,alpha'-dialkylalkane monocarboxylic acids and vinyl esters of saturated alpha-alkylalkane monocarboxylic acids having in each case 5-13 carbon atoms, preferably, 9-11 carbon atoms in the molecule.

Examples of vinylaromatic hydrocarbons preferably are those having 8-12 carbon atoms in the molecule. Examples of such monomers are styrene, alphamethylstyrene, chlorostyrenes, vinyltoluenes, 2,5-dimethylstyrene, p-methoxystyrene and tertiary-butylstyrene.

Examples of hydroxyl-functional polyester resins which can be used as binder component A) include all polyester resins which are suited for solvent-based coating compositions, for example, hydroxyl-functional polyesters with a number average molecular weight of 500-10,000 g/mol, preferably, of 1100-8000 g/mol, an acid value of 10-150 mg KOH/g, preferably, of 15-50 mg KOH/g and a hydroxyl value of 40-400 mg KOH/g, preferably, of 50-200 g/mol. The polyesters may be saturated or unsaturated and they may optionally be modified with fatty acids. The polyesters are produced using known processes with elimination of water from polycarboxylic acids and polyalcohols.

Also, usual hydroxy-functional polyurethane resins can be used.

The hydroxyl-functional binder component A) suitably comprises about 10 to 100 % by weight solids, preferably 30 to 100 % by weight solids, based on the weight solids of the binder of at least one hydroxyl-functional (meth)acrylate copolymer as described above. The hydroxyl-functional (meth)acrylate copolymers may be used in combination with other hydroxyl-functional resins.

Preferred hydroxyl-functional (meth)acrylate copolymers comprising
a) 10-80% by weight, preferably 20-60% by weight, of a reaction product of a monoepoxyester and an unsaturated acid functional monomer
b) 0-40% by weight, preferably 10-30% by weight, of a hydroxy functional unsaturated monomer which is different from component a),
c) 1-8% by weight, preferably 2-6% by weight, of an unsaturated acid functional monomer and
d) 0-70% by weight, preferably 20-50% by weight, of other polymerisable unsaturated monomers, wherein the% by weight of components A) and B) and of components a) to d) is adding up to 100% by weight and wherein the (meth)acrylate copolymer is prepared by a skew feed polymerization process with at least two feed streams. Preferably one feed stream comprises
   I) 60-100% by weight of the reaction product of a monoepoxyester and an unsaturated acid functional monomer a), based on the total amount of component a) in the copolymer,
   II) 0-60% by weight of the hydroxy functional unsaturated monomer b), based on the total amount of monomer b) in the copolymer,
   III) 0-30% by weight of the unsaturated acid functional monomer c) based on the total amount of monomer c) in the copolymer, and
   IV) 0-80% by weight of the other polymerisable unsaturated monomers d), based on the total amount of monomers d) in the copolymer, and wherein the remaining one or more feed streams comprise the balance of components a) to d).
Those useful (meth)acrylate copolymers are described , for example, in EP 1 784 463.

The filler compositions can also contain low molecular reactive components, so-called reactive thinners, which are able to react with the cross-linking components. Examples of these are hydroxy- or amino-functional reactive thinners.

The filler compositions to be used according to the invention contain polyisocyanates with free isocyanate groups (component B) as cross-linking agents. Examples of the polyisocyanates are any number of organic polyisocyanates with aliphatically, cycloaliphatically, araliphatically and/or aromatically bound free isocyanate groups. The polyisocyanates are liquid at room temperature or become liquid through the addition of organic solvents. At 23°C, the polyisocyanates generally have a viscosity of 1 to 6,000 mPas, preferably of 5 to 3,000 mPas.

The preferred polyisocyanates are polyisocyanates or polyisocyanate mixtures with exclusively aliphatically and/or cycloaliphatically bound isocyanate groups with an average NCO functionality of 1.5 to 5, preferably 2 to 4.

Examples of particularly suitable polyisocyanates are what are known as "paint polyisocyanates" based on hexamethylene diisocyanate (HDI), 1-isocyanato-3,3,5-trimethyl-5-isocyanatomethyl-cyclohexane (IPDI) and/or bis(isocyanatocyclohexyl)-methane and the derivatives known per se, containing biuret, allophanate, urethane and/or isocyanurate groups of these diisocyanates which, following production, are freed from surplus parent diisocyanate, preferably by distillation, with only a residue content of less than 0.5% by weight. Triisocyanates, such as, triisocyanatononan can also be used.

Sterically hindered polyisocyanates are also suitable. Examples of these are 1,1,6,6-tetramethyl-hexamethylene diisocyanate, 1,5-dibutyl-pentamethyldiisocyanate, p- or m-tetramethylxylylene diisocyanate and the appropriate hydrated homologues.

In principle, diisocyanates can be converted by the usual process to higher functional compounds, for example, by trimerization or by reaction with water or polyols, such as, for example, trimethylolpropane or glycerine. The polyisocyanates can also be used in the form of isocyanate-modified resins.

The polyisocyanate cross-linking agents can be used individually or mixed.

The polyisocyanate cross-linking agents are those commonly used in the paint industry, and are described in detail in the literature and are also obtainable commercially.

The isocyanate groups of polyisocyanate crosslinking agent B) may be partially blocked. Low molecular weight compounds containing active hydrogen for blocking NCO groups are known. Examples of these are aliphatic or cycloaliphatic alcohols, dialkylaminoalcohols, oximes, lactams, imides, hydroxyalkyl esters, esters of malonic or acetoacetic acid.

Although not preferred, the polyisocyanate crossliking agent B) can be used in combination with co-crosslinkers, e.g., in combination with melamine resins and/or completely blocked polyisocyanates.

According to the invention at least one epoxy-functional silane compound of Formula (I) is used as component C) in the filler composition.

Preferred compounds of the formula (I) are those in which X is 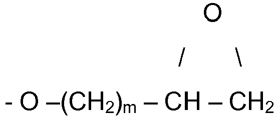 and m is 1 - 4.

Compounds in which R1, R2 and R3 mutually independently mean identical or different alkoxy groups having 1-4 , preferably 1, 2 or 3 carbon atoms are likewise preferred. Particularly preferred alkoxy groups are methoxy, ethoxy and isopropoxy groups.

Examples of particularly suitable epoxy-functional silane compounds of the general formula (I) are (3-glycidoxypropyl)trimethoxysilane, (3-glycidoxypropyl)triethoxysilane, (3-glycidoxypropyl)triisopropoxysilane, beta-(3,4-epoxycyclohexyl)ethyltrimethoxysilane and beta-(3,4-epoxycyclohexyl)ethyltriethoxysilane. Silanes with methoxy groups, such as for example (3-glycidoxypropyl)trimethoxysilane and beta-(3,4-epoxycyclohexyl)ethyltrimethoxysilane are particularly preferred here.

It is most preferred to use (3-glycidoxypropyl)trimethoxysilane.

Epoxy-functional silane compounds which may be used are also obtainable as commercial products, for example under the name Dynasylan Glymo from Degussa, Silquest A-187 and Silquest A-186 from GE Silicones and A-186 and A-187 from ACC Silicones.

The active hydrogen containing, in particular hydroxy-functional binder component A) and the cross-linking agents B) are used in such quantity ratios that the equivalent ratio of hydroxyl groups of component A) to the isocyanate groups of the cross-linking agent B) is 5 : 1 to 1 : 5, for example, preferably, 3 : 1 to 1 : 3, particularly preferably, 1.5 : 1 to 1 : 1.5. If further hydroxy-functional binders and reactive thinners are used, their reactive functions should be taken into consideration when calculating the equivalent ratio.

The filler compositions may contain in addition organic solvents and conventional coating additives. The solvents may originate from the preparation of the binders or they may be added separately. They are organic solvents typical of those used for coatings and well known to the skilled person.

The additives are the conventional additives, which may be used, in the coating sector. Examples of such additives typical for use in filler coating compositions include levelling agents based on (meth)acrylic homopolymers or silicone oils, anticratering agents, antifoaming agents, wetting agents, curing catalysts for the cross-linking reaction, for example, organic metal salts, such as, dibutyltin dilaurate, zinc naphthenate and compounds containing tertiary amino groups such as triethylamine for the hydroxyl/isocyanate reaction, dispersing agents, thickeners and emulsifiers.

The filler coating compositions also contain conventional organic and/or inorganic color-imparting pigments and/or extenders as are known to the person skilled in the art for the production of coating compositions, in particular for the production of filler compositions in the vehicle coating sector. Examples of pigments are titanium dioxide, micronized titanium dioxide, iron oxide pigments, carbon black, azo pigments, phthalocyanine pigments, quinacridone and pyrrolopyrrole pigments. Examples of extenders are silicon dioxide, aluminium silicate, aluminium oxide, barium sulfate and talcum.

The filler coating compositions generally have a weight ratio of extenders and pigments to binder (solids) of preferably, 4.0 : 1.0 to 1.0 : 2.0, particularly preferably, of 3.0 : 1.0 to 1.5 to 1.0. Pigment volume concentration (PVC) is for example in the range of 20 to 65 for filler compositions in general and preferably in the range of 35 to 55 for sanding fillers. PVC is the ratio of volume of pigments/extenders to total volume of all non-volatile components of the composition (including pigments/extenders, binders, additives etc.)

Preferred filler coating compositions which are to be applied in step 1 of the process according to the invention comprise:
A2) at least one hydroxyl-functional (meth)acrylate resin,
B2) at least one polyisocyanate and
C) at least one epoxy-functional silane of the general Formula (I) as defined above.

Preferred hydroxyl-functional (meth)acrylate copolymers are those (meth)acrylate copolymers as described already above and disclosed, for example, in EP 1 784 463.

It has been found that, by using the epoxy-functional silane compounds C) in the filler coating composition of the multilayer structure, it is possible to achieve both greatly improved humidity resistance and adhesion properties, i.e. greatly improved interlayer adhesion between the individual layers and very good cohesion within the water-borne base coat layer or the water-borne single-stage top coat layer, e.g. after humidity/temperature strain. It is assumed here that epoxy-functional silane C) also diffuses into the water-borne base coat layer across the boundary layer between the two layers and thus also contributes to a distinct improvement in interlayer adhesion between the the water-borne base coat layer and the clear coat layer. The water-borne base coat layer exhibits very good cohesion, even when applied in relatively thick films of for example 25 µm, as are required for the application of solid water-based base coat coating compositions. Also the water-borne top coat layer exhibits very good cohesion,

The individual steps of the process according to the invention are explained in greater detail below.

In the multilayer coating process according to the invention, in step 1 the filler layer of the organic solvent-based filler coating composition is applied onto an optionally pre-coated substrate. Suitable substrates are metal and plastics substrates, in particular the substrates known in the automotive industry, such as for example iron, zinc, aluminium, magnesium, stainless steel or the alloys thereof, together with polyurethanes, polycarbonates or polyolefins.

In the case of vehicle body or vehicle body part coating, the filler coating compositions are applied, preferably by means of spraying, onto the substrates. The substrates, in particular the vehicle bodies or parts thereof may already be precoated in conventional manner before application of the filler coating composition. The prior coating may comprise a coating of a primer coating composition, for example, a wash primer as is conventionally used in vehicle coating. The filler coating compositions may also perform the function of a filler-primer or priming filler. The filler coating compositions are applied usually in a resulting dry film thickness of 25 to 400 µm, for example, in a resulting dry film thickness of 80 to 250 µm in case of sanding fillers (before sanding).

The filler coating composition may also be applied onto an intact existing or original coating, for example, onto electrodeposited primers.

In the multilayer coating process according to the first alternative of the present invention, in step 2 a base coat layer of a water-based base coat coating composition is applied onto the filler layer.

The filler layer may be cured or dried or flashed off before application of the water-borne base coat coating composition. In case of sanding fillers the filler layer is, for example, dried or cured at room temperature, e.g. overnight, or dried or cured at temperatures of e.g. 40-60°C.

The water-based base coat coating composition to be applied in step 2) comprises effect or solid-colour base coat coating compositions as are conventionally used in vehicle coating.

The water-based base coat compositions contain the conventional constituents of a water-based pigmented base coat coating composition: color-imparting and/or special effect-imparting pigments, one or more binders, water and optionally at least one of the following constituents: crosslinking agents, fillers, conventional coating additives and organic solvents.

Examples of binders are conventional film-forming, water-dilutable binders familiar to the person skilled in the art, such as water-dilutable polyester resins, water-dilutable (meth)acrylic copolymer resins or water-dilutable polyester/(meth)acrylic copolymer hybrids and water-dilutable polyurethane resins or polyurethane/(meth)acrylic copolymer hybrids. These may be reactive or non-functional resins.

The water-based base coat coating compositions may be physically drying or chemically crosslinking. Accordingly, the water-based coating compositions may contain crosslinking agents, such as, for example, free polyisocyanates. Selection of the optionally used crosslinking agents depends on the type of crosslinkable groups in the binders and is familiar to the person skilled in the art. Physically drying water-based coating compositions are preferred.

Preferably the water-based base coating compositions comprise water-dilutable polyurethane resins, optionally in combination with other water-dilutable resins, e.g. water-dilutable (meth)acrylic copolymers, and with dispersants. Examples of water-dilutable polyurethane resins are those, for example, with a number average molecular weight Mn of 500 to 500 000 g/mol, preferably, of 1100 to 300 000 g/mol, most preferably, of 5000 to 300 000 g/mol, an acid value of 10 to 100 mg KOH/g, preferably of 20 to 80 mg KOH/g. Appropriate polyurethane resins which may be used are, for example, prepared by reacting compounds which are reactive with respect to isocyanate groups and polyisocyanates having at least 2 free isocyanate groups per molecule. The thus obtained polyurethane resins can still be subjected to chain extension to increase the molecular weight. For example, NCO-functional polyurethane prepolymers can be reacted with compounds, which are reactive with respect to isocyanate groups. Compounds, which are reactive with respect to isocyanate groups, are in particular compounds with hydroxyl and/or secondary and/or primary amino groups. OH-functional polyurethane prepolymers can be chain extended for example with polyisocyanates.

Preferably the water-based base coating compositions comprise at least one water-reducible polyurethane/polyurea resin based on polycarbonate and/or polyester polyols, in particular polycarbonate and/or polyester diols. Most preferred the water-based base coating compositions comprise the at least one water-reducible polyurethane/polyurea resin based on polycarbonate and/or polyester polyols, in particular diols, in combination with at least one aqueous (meth)acrylic latex. Preferably the aqueous (meth)acrylic latex is prepared by multistage emulsion polymerization in the aqueous phase, comprising the steps:
1) free-radical polymerization of a mixture A of olefinically unsaturated, free-radically polymerizable monomers, optionally comprising at least one monomer with at least one acid group and at least one olefinically polyunsaturated monomer, in the aqueous phase,
2) free-radical polymerization of at least one mixture B of olefinically unsaturated, free-radically polymerizable monomers, optionally comprising at least one monomer with at least one acid group and at least one olefinically polyunsaturated monomer in the presence of the product obtained in process step 1),
wherein the ratio by weight of mixture A to the at least one mixture B is from 15:85 to 85:15 and wherein mixture A or the at least one mixture B or both mixture A and the at least one mixture B comprise the at least one monomer with at least one acid group and wherein mixture A or the at least one mixture B or both mixture A and the at least one mixture B comprise the at least one olefinically polyunsaturated monomer.

Useful water-reducible polyurethane/polyurea resins based on polycarbonate polyols and on mixtures of polycarbonate and polyester polyols are described, for example in EP 427 979 and EP 669 352. Useful aqueous (meth)acrylic lattices are described, for example in WO 2006/118974.

The polyurethane/polyurea resins and aqueous (meth)acrylic lattices can be used in combination with pigment dispersants, in particular pigment dispersions based on graft copolymers. The graft copolymers have weight average molecular weights of about 5,000-100,000 and a polymeric backbone and macromonomer side chains attached to the backbone, wherein the polymeric backbone is hydrophobic in comparison to the side chains and contains polymerized ethylenically unsaturated hydrophobic monomers and the side chains are hydrophilic macromonomers attached to the backbone at a single terminal point and contain polymerized ethylenically unsaturated monomers and 2-100% by weight, based on the weight of the graft copolymer, of polymerized ethylenically unsaturated acid containing monomers and have a weight average molecular weight of about 1,000-30,000. Those pigment dispersions are described, for example in US 5,231,131.

The water-based base coat coating compositions contain conventional coating pigments, for example, special effect pigments (effect-imparting pigments) and/or color-imparting pigments selected from among white, colored and black pigments.

Special effect pigments impart to a coating a special effect, e.g. a color flop and/or lightness flop dependent on the angle of observation. Examples of those pigments are conventional effect pigments such as metal pigments. Example of metal pigments are those made from aluminum, copper or other metals, interference pigments such as, for example, metal oxide coated metal pigments, for example, iron oxide coated aluminum, coated mica such as, for example, titanium dioxide coated mica, pigments which produce a graphite effect, iron oxide in flake form, liquid crystal pigments, coated aluminum oxide pigments, coated silicon dioxide pigments. Examples of white, colored and black pigments are the conventional inorganic or organic pigments known to the person skilled in the art, such as, for example, titanium dioxide, iron oxide pigments, carbon black, azo pigments, phthalocyanine pigments, quinacridone pigments, pyrrolopyrrole pigments, perylene pigments.

The water-based base coat coating compositions may contain conventional coating additives in conventional quantities, for example, of 0.1 to 5 wt.%, relative to the solids content thereof. Examples are neutralizing agents, antifoaming agents, wetting agents, adhesion promoters, catalysts, levelling agents, anticratering agents, thickeners, rheology control agents, e.g. layered silicates and light stabilizers.

The water-based base coat coating compositions may contain conventional coating solvents, for example, in a proportion of preferably less than 20 wt.%, particularly preferably of less than 15 wt%.

Once the water-borne base coat coating composition has been applied a clear coat coating composition is applied in step 3 of the process of the present invention. The clear coat coating composition may here be applied onto the base coat layer either after drying or curing or after briefly flashing off, for example, at room temperature.

Preferably the clear coat coating compositions comprise a "two-component" coating composition, i.e. comprises components which are reactive towards one another, namely a binder component comprising active hydrogen and a polyisocyanate crosslinking agent.

Preferred clear coat coating compositions comprise at least one hydroxyl-functional (meth)acrylate resin, optionally in combination with at least one hydroxyl-functional oligomeric polyester and at least one polyisocyanate.

The clear coat coating composition may comprise 30 to 70 % by weight solids of the at least one binder with functional groups containing active hydrogen and 20 to 50 % by weight solids of at least one curing agent with free isocyanate groups, relative to the total amount of the clear coating composition.

The (meth)acrylate resins may advantageously be used in combination with at least one hydroxyl-functional polyester oligomer. Preferred polyester oligomers having a weight average molecular weight (Mw) not exceeding 3,000, preferably of 200-2,000, and a polydispersity of less than 1.7.

Useful oligomers include caprolactone oligomers containing terminal hydroxyl groups which may be prepared by initiating the polymerization of caprolactone with a cyclic polyol, particularly a cycloaliphatic polyol, in the presence of a tin catalysts via conventional solution polymerization techniques. Such caprolactone oligomers are well known and described at length in Anderson et al. U.S. Pat. No. 5,354,797.

Other useful oligomers include alkylene oxide polyester oligomers containing terminal hydroxyl groups which may be made by reacting stoichiometric amounts of a cycloaliphatic monomeric anhydride with a linear or branched polyol in solution at elevated temperatures in the presence of a tin catalyst using standard techniques and then capping the acid oligomers so formed with monofunctional epoxies, particularly alkylene oxide.

Cycloaliphatic anhydride monomers such as hexahydrophthalic anhydride and methyl hexahydrophthalic anhydride are typically employed in the alkylene oxide oligomers above. Aliphatic or aromatic anhydrides, such as succinic anhydride or phthalic anhydride may also be used in conjunction with the anhydrides described above. Typically useful linear or branched polyols include, hexanediol, 1,4-cyclohexane dimethanol, trimethylol propane, and pentaerythritol. Useful monofunctional epoxies include alkylene oxides of 2 to 12 carbon atoms. Ethylene, propylene and butylene oxides are preferred although ethylene oxide is most preferred. Other epoxies, such as. Cardura CE5 or Cardura CE10 glycidyl ether may be used in conjunction with the monofunctional epoxies described above. Particularly preferred alkylene oxide oligomers are formed from methyl hexahydrophthalic anhydride; either 1,4-cyclohexanedimethanol, trimethylol propane, or pentaerythritol; and ethylene oxide reacted in stoichiometric amounts.

Furthermore suitable oligomeric polyesters can be prepared using a monoepoxyester and preferably a monoepoxyester of a branched polycarboxylic acid such as a tertiary fatty acid like Cardura^{®} CE10 (versatic acid CE10) or Cardura^{®} CE5 (pivalic acid CE5). Those oligomeric polyesters can be synthesized by various routes, but preferably by employing a ring-opening polycondensation reaction in which a multi-functional polyol (preferably two to four-functional) or a blend of those polyols, so that the average functionality is at least two, are reacted with an anhydride and/or acid anhydride and further with a sufficient amount of a monoepoxyester to convert the acid groups into hydroxyl groups.

Suitable polyols for the above-mentioned synthesis are glycerine, trimethylolpropane, pentaerythritol, neopentyl glycol, ethyleneglycol, and the like. Suitable anhydrides for the above-mentioned synthesis include succinic anhydride, maleic anhydride, phthalic anhydride, hexahydrophthalic anhydride, methylhexahydrophthalic anhydride, and the like. Suitable acid-anhydrides for the above-mentioned synthesis are trimellitic anhydride, hydrogenated trimellitic anhydride, the Diels-Alder adduct of maleic anhydride with sorbic acid, the hydrogenated Diels-Alder adduct of maleic anhydride and sorbic acid, and the like.

Suitable monoepoxyesters which can be used for the above-mentioned synthesis are the epoxyesters of benzoic acid, acetic acid, privalic acid (Cardura CE5), versatic acid (Cardura CE10), isobutyric acid (Cardura CE4).

Compatible blends of any of the aforementioned oligomers can be used as well.

Useful combinations of hydroxyl-functional (meth)acrylic copolymers and hydroxyl-functional polyester oligomers are disclosed, for example, in EP 801 661 and US 6,472,493.

The clear coating compositions may contain usual coating additives and organic solvents.

In the multilayer coating process according to the second alternative of the present invention, in step 2 a single-stage top coat layer of a water-based single-stage top coat composition is applied onto the filler layer. The filler layer may be cured or dried or flashed off before application of the water-based single-stage top coat coating composition. In case of sanding fillers the filler layer is, for example, dried or cured at room temperature, e.g. overnight, or dried or cured at temperatures of e.g. 40-60°C.

The water-based single-stage top coat coating composition contains conventional coating pigments, for example, special effect pigments (effect-imparting pigments) and/or color-imparting pigments selected from among white, colored and black pigments. Those pigments are described already above.

The water-based single-stage top coat coating composition comprises a "two-component" coating composition, i.e. comprises components which are reactive towards one another, namely a binder component comprising active hydrogen and a polyisocyanate crosslinking agent.

The water-based single-stage top coat coating composition preferably comprises 20 to 70 % by weight solids of at least one binder with functional groups containing active hydrogen and 10 to 50 % by weight solids of at least one curing agent with free isocyanate groups, relative to the total amount of the top coating composition.

Preferred single-stage top coat coating composition comprise at least one hydroxyl-functional (meth)acrylate copolymer, optionally in combination with at least one hydroxyl-functional oligomeric polyester and at least one polyisocyanate.

Useful (meth)acrylate copolymers and polyisocyanates are those described already above for the filler and the clear coat coating composition. Most preferred (meth)acrylate copolymers are the preferred (meth)acrylate copolymers disclosed in the description of the filler coating composition.

The resultant clear coats and single-stage top coats may be cured at room temperature or forced at higher temperatures, for example of up to 80°C, preferably at 40 to 60°C. They may, however, also be cured at higher temperatures of for example 80-160°C. Curing temperatures are determined by the field of use. The coating compositions are applied by conventional processes, preferably by means of spray application.

The process according to the invention can be used in automotive and industrial coating, however particularly advantageously in vehicle repair coating. Curing temperatures from 20º C to 80ºC, for example, particularly from 40º C to 60º C are used in vehicle repair coating. The coating compositions can also be used advantageously for coating large vehicles and transportation vehicles, such as, trucks, busses and railroad cars, where typically curing temperatures of up to 80°C or higher than 80°C are used. Furthermore, the coating compositions can be used for coating any industrial goods other than motor vehicles.

The invention will be explained in more detail on the basis of the examples below. All parts and percentages are on a weight basis unless otherwise indicated.

### Examples

### Example 1

### Preparation of primer compositions

LE2004, a commercial sanding primer surfacer (from DuPont Refinish), based on a hydroxyl-functional (meth)acrylic copolymer, has been used as base component (hydroxyl component) for the primer (with pigment volume concentration (PVC) of 60, solids content of 70 % by weight).

Desmodur^{®} 3390, a HDI-trimer based polyisocyanate from Bayer has been used as activator (cross-linking agent). The activator has been modified with 9 % by weight solids of an epoxy-functional silane of formula (I) (Dynasylan^{®} Glymo from Degussa), relative to the total amount of activator, which corresponds to 4.4 % by weight solids of the epoxy-functional silane, relative to the sum of the solids content of the hydroxyl-functional (meth)acrylic copolymer and the polyisocyanate. The non-modified activator, which does not contain the epoxy-functional silane, has been used for comparison (Comp. Activator 1). The activators were formulated with the ingredients shown in Table 1. The amount of the solvents was adjusted in order to keep the solids (70 %) constant.

**Table 1**

| | Composition | Examples | |
|---|---|---|---|
| | | Comp. Activator 1 (% by weight) | Activator 1 (% by weight) |
| Polyisocyanate | Desmodur^{®} 3390 (Bayer) | 78.23 | 78.23 |
| Solvents | Butylacetate | 10.22 | 8.79 |
| | Xylene | 11.21 | 3.64 |
| Epoxy-funct. silane | Dynasylan^{®} Glymo (Degussa) | / | 9 |
| Catalyst | DBTDL (10% in butyl acetate) | 0.34 | 0.34 |

The primer LE2004 (base component) was activated with activator 1 and the comparative activator 1 (7:1 volume ratio base component: activator) to form primer 1 (PR 1) according to the invention and comparative primer 1 (comp. PR 1). 10% by weight of butyl acetate were added to yield a viscosity of about 24 s (according to DIN EN ISO 2431 DIN 4 cup, 20°C)

Primer 1 and comparative primer 1 have been applied on steel panels, pre-coated with an electro-coat coating composition, in a resulting dry film thickness of 140 µm (before sanding) and dried overnight at room temperature. The primer has been sanded to a resulting dry film thickness of 100 µm.

A waterborne basecoat (Cromax Pro Silbersee / LY7W from DuPont Refinish) has been applied in one mist coat and one coat in a resulting dry film thickness of 13 µm.

The basecoat layer has been dried for 10 minutes at 40°C. Then a commercial clearcoat (3800 S Cromaclear HS clearcoat from DuPont Refinish) has been applied in a resulting dry film thickness of 40 µm and baked for 30 minutes at 60°C.

The panels have been left for further drying for 3 days at room temperature.

Then the panels have been crosshatched with a cutting machine (Erichson Model 430/2). The samples then were put into a humidity cabinet for 10 days (40°C, 100% humidity).

After the test in the humidity cabinet the panels have been rested for an hour and were then crosshatched again. The panels were then left 24 hours to recover and crosshatched again.

Crosshatch testing has been done according to DIN EN ISO 2409. A high GT value (GT 5) means total loss of adhesion (total failure), a low GT value (GT 0) means total adhesion (no failure).

### Cross-hatch adhesion:

| Crosshatch test | Comp. PR1 | PR1 |
|---|---|---|
| Before humidity cabinet: | GT 1 | GT 0-1 |
| 1h after humidity cabinet: | GT 5 | GT 2 |
| After humidity cabinet after 24 hours recovery: | GT 5 | GT 0 |

### Example 2

Again LE2004, a commercial sanding primer surfacer (from DuPont Refinish), based on a hydroxyl-functional (meth)acrylic copolymer, has been used as base component (hydroxyl component) for the primer (with pigment volume concentration (PVC) of 60, solids content of 70 % by weight) and Desmodur^{®} 3390, a HDI-trimer based polyisocyanate from Bayer has been used as activator (cross-linking agent). The primer LE2004 (base component) was activated with activator 2 and activator 3 and the comparative activator 2 (4:1 volume ratio base component: activator) to form primer 2 (PR 2) and primer 3 (PR3) according to the invention and comparative primer 2 (comp. PR 2). The activators were formulated with the ingredients shown in Table 2. The amount of the solvents was adjusted in order to keep the solids (70 %) constant.

**Table 2**

| | Composition | Examples | | |
|---|---|---|---|---|
| | | Comp. Activator 2 (% by weight) | Activator 2 (% by weight) | Activator 3 (% by weight) |
| Polyisocyanate | Desmodur^{®} 3390 (Bayer) | 53.23 | 53.23 | 53.23 |
| Solvents | Butylacetate | 24.57 | 24.57 | 24.57 |
| | Xylene | 8.43 | 8.43 | 8.43 |
| | Solvesso 100 | 11.17 | 7.67 | 9.47 |
| | Butylglycolacet ate | 2.5 | 2.5 | 2.5 |
| Epoxy-funct. silane | Dynasylan^{®} Glymo (Degussa) | / | 3.5 | 1.7 |
| Catalyst | DBTDL (10% in butyl acetate) | 0.1 | 0.1 | 0.1 |

Primers 2 and 3 and comparative primer 2 have been applied on steel panels, pre-coated with an electro-coat coating composition, in a resulting dry film thickness of 120 µm (before sanding) and dried overnight at room temperature. The primer has been sanded to a resulting dry film thickness of 90 µm.

A waterborne basecoat (Cromax Pro Silbersee / LY7W from DuPont refinish) has then been applied to the primer in a resulting dry film thickness of 13 µm (with one mist coat and one coat). The basecoat layer has been dried for 10 minutes at 40°. Then a commercial clearcoat (3800S Cromaclear HS clearcoat from DuPont refinish) has been applied in a resulting dry film thickness of 40 µm and baked for 30 minutes at 60°C. The panels have been left for further drying for 3 days at room temperature.

Testing and rating has been done in the same way as described in example 1.

**Cross-hatch adhesion:**

| Cross-hatch | Comp PR 2 | PR 2 | PR3 |
|---|---|---|---|
| before humidity cabinet: | GT 0 | GT 0 | GT 2 |
| 1h after humidity cabinet: | GT 5 | GT 1 | GT 2 |
| after humidity cabinet, after 24 hours recovery: | GT 5 | GT 0-1 | GT 0 |

The type of failure in the coating has also been evaluated. The failure always appears between primer and basecoat in the comparative examples. Thus, the failure is a loss of inter-coat adhesion between primer and basecoat.

The results clearly show that the multilayer coatings prepared according to the invention have improved adhesion properties as can be seen on the basis of the adhesion tests after humidity cabinet. In particular, the rush recovering after strain in humidity cabinet is important.

## Claims

1. A process for the multilayer coating of substrates comprising the steps:
1. Applying a filler layer of a filler coating composition onto an optionally pre-coated substrate,
2. Applying a base coat layer of a water-based base coat coating composition containing color-imparting and/or special effect-imparting pigments, one or more binders, water and optionally at least one of the following constituents: crosslinking agents, fillers, conventional coating additives and organic solvents onto the filler layer,
3. Applying a clear coat layer of a transparent clear coat coating composition onto the base coat layer and
4. Curing the clear coat layer,
wherein the filler coating composition being an organic solvent-based coating composition comprising:
A) at least one binder with functional groups containing active hydrogen,
B) at least one polyisocyanate cross-linking agent with free isocyanate groups and
C) at least one epoxy-functional silane of the general Formula (I): 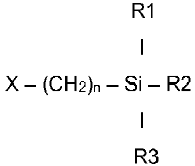 X denoting the residues 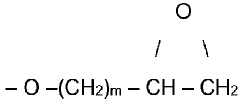
with m being 1-4, or epoxy cyclohexyl,
R1, R2, R3 mutually independently meaning identical or different organic residues with 1 to 30 carbon atoms per molecule, providing that at least one of the residues is an alkoxy group with 1 to 4 carbon atoms and
n is 2, 3 or 4,
wherein the filler coating composition comprises 0.5 to 7.0% by weight solids of the epoxy-functional silane component C), relative to the sum of the solids content of component A) and component B).

2. A process for the multilayer coating of substrates comprising the following steps:
1. Applying a filler layer of a filler coating composition onto an optionally pre-coated substrate,
2. Applying a single-stage top coat layer of a water-based single-stage top coat coating composition containing color-imparting and/or special effect-imparting pigments onto the filler layer, wherein the top coat coating composition comprises a two-component coating composition comprising a binder component comprising active hydrogen and a polyisocyanate crosslinking agent, and
3. Curing the single-stage top coat layer, optionally together with the filler layer, wherein the filler coating composition being an organic solvent-based coating composition comprising:
A) at least one binder with functional groups containing active hydrogen,
B) at least one polyisocyanate cross-linking agent with free isocyanate groups and
C) at least one epoxy-functional silane of the general Formula (I): 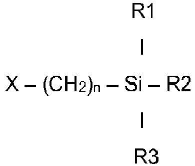 X denoting the residues 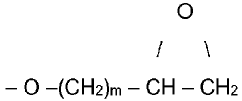
with m being 1-4, or epoxy cyclohexyl,
R1, R2, R3 mutually independently meaning identical or different organic residues with 1 to 30 carbon atoms per molecule, providing that at least one of the residues is an alkoxy group with 1 to 4 carbon atoms and
n is 2, 3 or 4
wherein the filler coating composition comprises 0.5 to 7.0% by weight solids of the epoxy-functional silane component C), relative to the sum of the solids content of component A) and component B).

3. The process according to claims 1 or 2, wherein the filler coating composition comprises 1.0 to 6.0 % by weight solids of the epoxy-functional silane component C), relative to the sum of the solids content of component A) and component B).

4. The process according to any one of claims 1 to 3, wherein n is 2 or 3.

5. The process according to any one of claims 1 to 4, wherein R1, R2 and R3 mutually independently mean identical or different alkoxy groups having 1-4 carbon atoms.

6. The process according to any one of claims 1 to 5, wherein the binder A) comprises at least one hydroxy-functional (meth)acrylic copolymer.

7. The process according to any one of claims 1 to 6, wherein the clear coat coating composition comprises at least one hydroxy-functional (meth)acrylic copolymer in combination with at least one hydroxy-functional oligoester.

8. The process according to any one of claims 1 to 7, wherein the water-based base coat coating composition or the water-based base single-stage top coat coating composition is applied onto the filler layer after curing the filler layer.

9. The process according to any one of claims 1 to 8, wherein the substrate comprises vehicle bodies or parts thereof.

10. Use of the process according to any one of claims 1 to 9 in vehicle repair coating.

## Patentansprüche

1. Verfahren zur mehrschichtigen Beschichtung von Substraten, umfassend die folgenden Schritte:
1. Aufbringen einer Füllstoffschicht einer Füllstoffbeschichtungszusammensetzung auf ein wahlweise vorbeschichtetes Substrat,
2. Aufbringen einer Basislackschicht einer wasserbasierten Basislackbeschichtungszusammensetzung, die farbgebende und/oder effektgebende Pigmente, ein oder mehrere Bindemittel, Wasser und wahlweise mindestens eine der folgenden Komponenten enthält: Vernetzungsmittel, Füllstoffe, herkömmliche Beschichtungsadditive und organische Lösungsmittel, auf die Füllstoffschicht,
3. Aufbringen einer Klarlackschicht einer transparenten Klarlackbeschichtungszusammensetzung auf die Basislackschicht und
4. Aushärten der Klarlackschicht,
wobei die Füllstoffbeschichtungszusammensetzung eine Beschichtungszusammensetzung auf der Basis eines organischen Lösungsmittels ist, umfassend:
A) mindestens ein Bindemittel mit aktiven Wasserstoff enthaltenden funktionellen Gruppen,
B) mindestens ein Polyisocyanat-Vernetzungsmittel mit freien Isocyanatgruppen und
C) mindestens ein epoxidfunktionelles Silan der allgemeinen Formel (I): 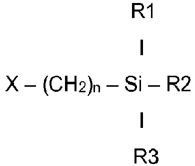 wobei X die folgenden Reste bezeichnet 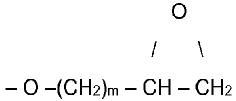
wobei m 1 bis 4 oder Epoxidcyclohexyl ist,
R1, R2, R3 unabhängig voneinander gleiche oder verschiedene organische Reste mit 1 bis 30 Kohlenstoffatomen pro Molekül bedeuten, sofern mindestens einer der Reste eine Alkoxygruppe mit 1 bis 4 Kohlenstoffatomen ist und
n 2, 3 oder 4 ist,
wobei die Füllstoffbeschichtungszusammensetzung 0,5 bis 7,0 Gew.-% Feststoffe der epoxidfunktionellen Silankomponente C), bezogen auf die Summe der Feststoffgehalte von Komponente A) und Komponente B), umfasst.

2. Verfahren zur mehrschichtigen Beschichtung von Substraten, umfassend die folgenden Schritte:
1. Aufbringen einer Füllstoffschicht einer Füllstoffbeschichtungszusammensetzung auf ein wahlweise vorbeschichtetes Substrat,
2. Aufbringen einer einstufigen Decklackschicht einer wasserbasierten einstufigen Decklackbeschichtungszusammensetzung, die farbgebende und/oder effektgebende Pigmente enthält, auf die Füllstoffschicht, wobei die Decklackbeschichtungszusammensetzung eine zweikomponentige Beschichtungszusammensetzung umfasst, die eine Bindemittelkomponente, die aktiven Wasserstoff umfasst, und ein Polyisocyanat-Vernetzungsmittel umfasst, und
3. Aushärten der einstufigen Decklackschicht, wahlweise zusammen mit der Füllstoffschicht, wobei die Füllstoffbeschichtungszusammensetzung eine Beschichtungszusammensetzung auf Basis eines organischen Lösungsmittels ist, umfassend:
A) mindestens ein Bindemittel mit aktiven Wasserstoff enthaltenden funktionellen Gruppen,
B) mindestens ein Polyisocyanat-Vernetzungsmittel mit freien Isocyanatgruppen und
C) mindestens ein epoxidfunktionelles Silan der allgemeinen Formel (I): 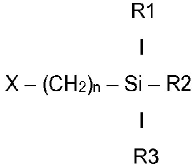 wobei X die folgenden Reste bezeichnet 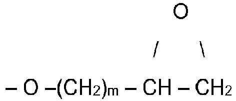
wobei m 1 bis 4 oder Epoxidcyclohexyl ist,
R1, R2, R3 unabhängig voneinander gleiche oder verschiedene organische Reste mit 1 bis 30 Kohlenstoffatomen pro Molekül bedeuten, sofern mindestens einer der Reste eine Alkoxygruppe mit 1 bis 4 Kohlenstoffatomen ist und
n 2, 3 oder 4 ist
wobei die Füllstoffbeschichtungszusammensetzung 0,5 bis 7,0 Gew.-% Feststoffe der epoxidfunktionellen Silankomponente C), bezogen auf die Summe der Feststoffgehalte von Komponente A) und Komponente B), umfasst.

3. Verfahren nach Anspruch 1 oder 2, wobei die Füllstoffbeschichtungszusammensetzung 1,0 bis 6,0 Gew.-% Feststoffe der epoxidfunktionellen Silankomponente C) enthält, bezogen auf die Summe der Feststoffgehalte von Komponente A) und Komponente B).

4. Verfahren nach einem der Ansprüche 1 bis 3, wobei n 2 oder 3 ist.

5. Verfahren nach einem der Ansprüche 1 bis 4, wobei R1, R2 und R3 unabhängig voneinander gleiche oder verschiedene Alkoxygruppen mit 1 bis 4 Kohlenstoffatomen bedeuten.

6. Verfahren nach einem der Ansprüche 1 bis 5, wobei das Bindemittel A) mindestens ein hydroxyfunktionelles (Meth)acrylcopolymer umfasst.

7. Verfahren nach einem der Ansprüche 1 bis 6, wobei die Klarlackbeschichtungszusammensetzung mindestens ein hydroxyfunktionelles (Meth)acrylcopolymer in Kombination mit mindestens einem hydroxyfunktionellen Oligoester umfasst.

8. Verfahren nach einem der Ansprüche 1 bis 7, wobei die Basislackbeschichtungszusammensetzung auf Wasserbasis oder die einstufige Decklackbeschichtungszusammensetzung auf Wasserbasis nach dem Aushärten der Füllstoffschicht auf die Füllstoffschicht aufgebracht wird.

9. Verfahren nach einem der Ansprüche 1 bis 8, wobei das Substrat das Fahrzeugkarosserien oder Teile davon umfasst.

10. Verwendung des Verfahrens nach einem der Ansprüche 1 bis 9 in einer Fahrzeugreparaturbeschichtung.

## Revendications

1. Procédé de revêtement multicouche de substrats comprenant les étapes consistant à :
1. appliquer une couche de charge d'une composition de revêtement de charge sur un substrat éventuellement pré-enduit,
2. appliquer une couche d'enduit de base d'une composition de revêtement d'enduit de base à base d'eau contenant des pigments conférant une couleur et/ou conférant un effet spécial, un ou plusieurs liants, de l'eau et éventuellement au moins l'un des constituants suivants : des agents de réticulation, des charges, des additifs de revêtement classiques et des solvants organiques sur la couche de charge,
3. appliquer une couche d'enduit lustré d'une composition de revêtement transparente d'enduit lustré sur la couche d'enduit de base et
4. durcir la couche d'enduit lustré,
dans lequel la composition de revêtement de charge étant une composition de revêtement à base de solvant organique comprenant :
A) au moins un liant avec des groupes fonctionnels contenant de l'hydrogène actif,
B) au moins un agent de réticulation polyisocyanate ayant des groupes isocyanates libres et
C) au moins un silane à fonctionnalité époxy de formule générale (I) : 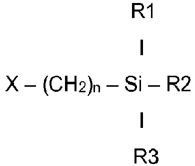 X représentant les résidus 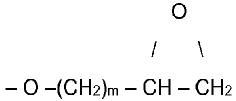
m valant 1 à 4, ou un résidu époxycyclohexyle,
R1, R2, R3 signifiant mutuellement indépendamment des résidus organiques identiques ou différents ayant 1 à 30 atomes de carbone par molécule, à condition qu'au moins l'un des résidus soit un groupe alcoxy ayant 1 à 4 atomes de carbone et n vaut 2, 3 ou 4,
dans lequel la composition de revêtement de charge comprend de 0,5 à 7,0 % en poids de solides du composant silane à fonctionnalité époxy C), par rapport à la somme de la teneur en solides du composant A) et du composant B).

2. Procédé de revêtement multicouche de substrats comprenant les étapes consistant à :
1. appliquer une couche de charge d'une composition de revêtement de charge sur un substrat éventuellement pré-enduit,
2. appliquer une couche d'enduit de finition en une étape d'une composition de revêtement d'enduit de finition en une étape à base d'eau contenant des pigments conférant une couleur et/ou conférant un effet spécial sur la couche de charge, la composition de revêtement d'enduit de finition comprenant une composition de revêtement à deux composants comprenant un composant liant comprenant de l'hydrogène actif et un agent de réticulation polyisocyanate, et
3. durcir la couche d'enduit de finition en une étape, éventuellement conjointement avec la couche de charge,
dans lequel la composition de revêtement de charge étant une composition de revêtement à base de solvant organique comprenant :
A) au moins un liant avec des groupes fonctionnels contenant de l'hydrogène actif,
B) au moins un agent de réticulation polyisocyanate ayant des groupes isocyanates libres et
C) au moins un silane à fonctionnalité époxy de formule générale (I) : 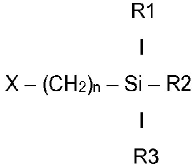 X représentant les résidus 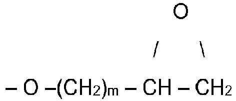
m valant 1 à 4, ou un résidu époxycyclohexyle,
R1, R2, R3 signifiant mutuellement indépendamment des résidus organiques identiques ou différents ayant 1 à 30 atomes de carbone par molécule, à condition qu'au moins l'un des résidus soit un groupe alcoxy ayant 1 à 4 atomes de carbone et n vaut 2, 3 ou 4
dans lequel la composition de revêtement de charge comprend de 0,5 à 7,0 % en poids de solides du composant silane à fonctionnalité époxy C), par rapport à la somme de la teneur en solides du composant A) et du composant B).

3. Procédé selon les revendications 1 ou 2, dans lequel la composition de revêtement de charge comprend de 1,0 à 6,0 % en poids de solides du composant silane à fonctionnalité époxy C), par rapport à la somme de la teneur en solides du composant A) et du composant B).

4. Procédé selon l'une quelconque des revendications 1 à 3, dans lequel n vaut 2 ou 3.

5. Procédé selon l'une quelconque des revendications 1 à 4, dans lequel R1, R2 and R3 signifient mutuellement indépendamment des groupes alcoxy identiques ou différents ayant 1 à 4 atomes de carbone.

6. Procédé selon l'une quelconque des revendications 1 à 5, dans lequel le liant A) comprend au moins un copolymère (méth)acrylique à fonctionnalité hydroxy.

7. Procédé selon l'une quelconque des revendications 1 à 6, dans lequel la composition de revêtement d'enduit lustré comprend au moins un copolymère (méth)acrylique à fonctionnalité hydroxy en association avec au moins un oligoester à fonctionnalité hydroxy.

8. Procédé selon l'une quelconque des revendications 1 à 7, dans lequel la composition de revêtement d'enduit de base à base d'eau ou la composition de revêtement d'enduit de finition en une étape à base d'eau est appliquée sur la couche de charge après durcissement de la couche de charge.

9. Procédé selon l'une quelconque des revendications 1 à 8, dans lequel le substrat comprend les carrosseries de véhicules ou des parties de celles-ci.

10. Utilisation du procédé selon l'une quelconque des revendications 1 à 9 dans un revêtement pour la réparation de véhicules.
